Europäisches Patentamt

(19) **European Patent Office**

**Office européen des brevets**

(11) Numéro de publication: **0 073 714**
**B1**

(12) **FASCICULE DE BREVET EUROPEEN**

(45) Date de publication du fascicule du brevet:
12.12.84

(51) Int. Cl.³: **C 10 L 5/44**

(21) Numéro de dépôt: **82401576.2**

(22) Date de dépôt: **25.08.82**

(54) **Procédé de transformation de matière ligneuse d'origine végétale par torréfaction et produit obtenu.**

(30) Priorité: **28.08.81 FR 8116463**

(43) Date de publication de la demande:
**09.03.83 Bulletin 83/10**

(45) Mention de la délivrance du brevet:
**12.12.84 Bulletin 84/50**

(84) Etats contractants désignés:
**AT BE CH DE GB IT LI LU NL SE**

(56) Documents cités:
**CH - A - 228 877**
**FR - A - 847 112**
**FR - A - 860 188**
**FR - A - 933 026**
**FR - A - 953 004**
**FR - A - 2 418 005**
**US - A - 2 106 973**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(72) Inventeur: **Schwob, Yvan, 22, rue Paul Valéry, F-75116 Paris (FR)**

(74) Mandataire: **Chevallier, Robert Marie Georges, Cabinet BOETTCHER 23, rue La Boétie, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé de transformation par torréfaction de matière ligneuse d'origine végérale ou de matière végétale lignocellulosique en un produit nouveau; elle a aussi pour objet ce dernier produit.

Le but principal de l'invention est de proposer un nouveau procédé permettant d'obtenir un nouveau produit ayant des propriétés nouvelles de plus grande facilité d'emploi et renfermant sensiblement la totalité de l'énergie thermique potentielle de la matière ligneuse de départ, pour un pouvoir calorifique notablement accru.

Un autre but de l'invention est de permettre l'utilisation de toutes sortes de matières ligneuses d'origine végétale, telles que bois, écorces, sciures, balles de riz, coques de noix, noyaux de fruits, paille, anas de lin, bagasse, etc.

Ces buts sont atteints, selon l'invention, grâce au fait qu'on soumet une matière ligneuse d'origine végétale à un traitement de torréfaction en atmosphère neutre à une température comprise entre 200 et 280° C, de préférence entre 240 et 260° C.

La torréfaction du bois est une opération déjà connue. Plus exactement, on trouve dans le brevet français N° 953 004 et dans le brevet suisse N° 228 877, la description d'une opération dite de torréfaction qui a lieu, respectivement, de 250 à 350° C et de 250 à 300° C, sans aucune précision relative à l'atmosphère sous laquelle on l'exécute, d'où il convient d'en déduire que l'atmosphère n'a pas d'importance particulière et que, en pratique, on opère sous l'atmosphère normale ambiante.

Le mérite de l'invention est d'avoir reconnu que la limite de 250° C est d'une grande importance. Une véritable torréfaction ne se fait qu'en-dessous de 280° C. Au-dessus, on risque de voir se déclencher un phénomène de pyrolyse qui, étant exothermique, est pratiquement incontrôlable et s'accompagne de décomposition de la matière ligneuse, avec formation de goudron, comme il est dit dans le brevet N° 228 877 précité.

La torréfaction selon l'invention consiste à ne pas dépasser 280° C — et même de préférence 260° C — afin d'avoir la certitude, notamment quand on opère par voie sèche, de ne pas risquer de voir la température dépasser 280° C, en certains points, avec déclenchement d'une réaction exothermique de pyrolyse. Pour cette raison, il est important aussi d'opérer en atmosphère neutre.

La demanderesse a trouvé que le traitement exécuté de cette façon est une véritable torréfaction sans pyrolyse qui conduit, de manière inattendue, à un produit nouveau ayant des caractéristiques propres qui sont précisées plus loin en détail. Le procédé de l'invention peut s'appliquer à tout déchet ligneux agricole ou forestier, de quelque dimension granulométrique que ce soit, étant précisé que, pour la commodité de mise en œuvre, les produits les plus fins peuvent être préalablement agglomérés par tous moyens connus, par exemple sous forme de croquettes de paille ou de sciure. Inversement, les bois en morceaux peuvent être préalablement fragmentés avant le traitement de torréfaction.

La durée de traitement dépend à la fois de la grosseur des fragments ainsi que de la température. Pour une grosseur de l'ordre du cm³ la durée de traitement peut être de 30 mn à 280° C, de 1 h. à 250° C, et de 2 h. à 230° C. Elle peut atteindre 5 h. pour des morceaux gros comme le poing.

Les produits de départ peuvent être secs ou humides et peuvent être soumis au traitement soit directement, c'est-à-dire à sec, soit dans un bain liquide.

Le produit obtenu dans les conditions opératoires du procédé de l'invention est nettement différent du bois et du charbon de bois. Il est même très différent du charbon dit »roux« obtenu par carbonisation à basse température du bois.

Le produit de l'invention présente des caractéristiques très intéressantes. Il est de couleur brune, sa friabilité est grande, mais moindre que celle du charbon de bois, car il est fractionnable à la main et peut donc être facilement broyé par tous moyens économiques connus. Il est non fermentescible. Son pouvoir calorifique est d'au moins 5000 kcal/kg (20 900 Kj/Kg) environ. Sa masse spécifique apparente est voisine de 0,25 kg/dm³ et son hygroscopicité est très faible, inférieure à 3%. Le carbone fixe est compris entre 35 et 40%, la différence étant constituée par les matières volatiles et les cendres. Sa réactivité est élevée.

Il semble que le traitement modifie les hémicelluloses contenues dans le bois, ou autre matière ligneuse, sans toucher la cellulose et la lignine stables aux températures de traitement du procédé de l'invention. Les hémicelluloses seraient transformées en un nouveau produit solide plus condensé et stable.

Il apparaît, en outre, que la torréfaction du bois, ou de toute autre matière ligneuse, s'accompagne du dégagement de la quasi-totalité de l'acide acétique, habituellement généré lors d'une carbonisation. De ce fait, le combustible obtenu ne présente plus les inconvénients bien connus qui accompagnent la combustion et la gazéification du bois et qui sont dûs à la corrosion provoquée par les gaz acides produits.

Les possibilités d'utilisation pratique du produit combustible de l'invention sont nombreuses.

Une chaudière à bois s'accommode avantageusement de ce combustible qui présente, par rapport au bois, les avantages suivants: pouvoir calorifique élevé, possibilité d'emploi de chaudière à combustible pulvérisé du fait de la friabilité de la matière, pas de dégagement d'acides corrosifs, transport et

**0 073 714**

stockage facilités, pas de reprise sensible d'eau au stockage.

Un gazogène à bois torréfié de l'invention a un fonctionnement amélioré du fait des propriétés du produit. Il faut ajouter au bilan favorable la réduction de l'humidité et des goudrons dans les gaz et un meilleur pouvoir calorifique de ces derniers.

Dans la carbonisation ultérieure possible du bois torréfié de l'invention, la valeur élevée du carbone fixe, expliquée par la condensation des hémicelluloses, conduit à des rendements en charbon supérieurs à 35%, chiffre impossible à atteindre par carbonisation directe du bois. Les pyroligneux obtenus contiennent moins d'acides et moins de produits lourds. Leur fractionnement en est simplifié.

Le bois torréfié de l'invention étant broyable, son traitement ultérieur par hydroliquéfaction en est facilité. Il se présente comme une matière première facilement manipulable par broyage, mélangeage, évitant les inconvénients bien connus de l'emploi direct du bois.

En résumé, le bois torréfié constitue une matière première définie, stable, intermédiaire entre le bois et le charbon de bois, ouvrant des emplois industriels nouveaux. Il permet la mobilisation des ressources agricoles et forestières jusqu'ici inemployées en transformant celles-ci en un combustible de maniement particulièrement avantageux.

On comprendra mieux l'invention à l'aide des exemples donnés ci-après de la mise en œuvre du procédé.

### Exemple 1

4 kg de plaquettes de chêne à 14% d'humidité et de grosseur moyenne égale au cm³, sont introduits dans un four tournant de 50 l. Cette enceinte est placée sous atmosphère d'azote et se trouve progressivement portée à 250°C (montée en température = 2°C par minute). Cette température est maintenue pendant deux heures. Après refroidissement, on recueille 2,5 kg de bois torréfié à 36% de carbone fixe de masse spécifique voisine de 0,25 kg/dm³ ayant une hygroscopicité de 3%. La phase pyroligneuse recueillie par condensation est de 1,3 kg. Elle contient 170 g d'acide acétique.

### Exemple 2

2 kg de croquettes de sciure à 5% d'humidité sont introduites avec 0,800 kg d'alcool oxo (coupe $C_{13}-C_{15}$) dans un four tournant, placé sous azote. On porte progressivement la température du four (montée 4°C par minute) jusqu'à distillation complète de l'alcool. Après refroidissement, on recueille 1,5 kg de bois torréfié à 38% de carbone fixe, de masse spécifique voisine de 0,25 kg/dm³ ayant une hygroscopicité de 3%. Dans cet exemple, la durée du traitement thermique correspond sensiblement au pseudo-palier de distillation de l'alcool et se trouve ainsi plus réduite que dans l'exemple 1 (environ 10 fois), pour un degré de transformation sensiblement identique.

Le bois torréfié de l'invention a une faible hygroscopicité qui lui procure une fiabilité d'emploi que ne permettent pas le bois et le charbon de bois (hygroscopicité forte et variable). Il ouvre ainsi indirectement la voie à une automatisation des installations qui n'a pu être réalisée jusqu'à présent.

Comme utilisation, on peut citer les deux qui suivent.

1)  Il est envisagé de monter des gazogènes à bois sur des véhicules lourds pour diminuer l'utilisation des carburants classiques. Ces gazogènes présentent les principaux inconvénients suivants:
    —  le rendement en énergie exprimé par rapport au bois est faible, ce qui augmente dans des proportions notables l'approvisionnement en biomasse;
    —  la gazéification du bois dégage de l'acide acétique et des composés lourds qui nécessitent une technologie particulière pour éviter une corrosion et une pollution excessives.

L'emploi du bois torréfié de l'invention évite en grande partie ces inconvénients puisqu'il améliore notablement la rentabilité énergétique globale comme le montrent les chiffres suivants:

**0,75 kg bois torréfié**
**(PC = 6000 kcal ou 25 080 kj)**

**1,5 kg bois à 33% d'humidité**
**(PC = 3200 kcal ou 12 540 kj)**

**0,30 kg charbon de bois**
**(PC = 8000 kcal ou 33 440 kj)**

3

Ainsi, le produit (rendement énergétique de fabrication) × (pouvoir calorifique) est maximal pour le bois torréfié de l'invention.

D'autre part, on a pu constater que le traitement thermique à plus haute température du bois torréfie de l'invention produit peu d'acide acétique (dégagé principalement avant sa formation) et peu de composés lourds, ce qui simplifie la technologie du dispositif à adopter.

2) On a pu constater, de façon surprenante, qu'en présence d'un catalyseur classique d'hydrogénation, le bois torréfie de l'invention peut être solubilisé dans un solvant du type fuel, alcool oxo, quand on place de mélange bois torréfié-solvant sous un balayage d'hydrogène à la pression ordinaire, à une température de l'ordre de 250°C. On obtient ainsi, à partir du bois torréfié, un combustible liquide »ex-bois« susceptible de nombreux emplois.

## Revendications

1. Procédé de transformation de matière ligneuse à l'état fragmenté, par chauffage pendant une durée de 30 nm à 5 h, caractérisé en ce qu'on chauffe cette matière en atmosphère neutre à une température comprise entre 200 et 280°C, de préférence entre 230 et 260°C.

2. Procédé selon la revendication 1, caractérisé en ce qu'on agglomère la matière ligneuse avant de la soumettre à l'opération de chauffage.

3. Procédé selon la revendication 1, caractérisé en ce qu'on chauffe la matière dans un bain liquide.

4. Procédé selon l'une quelconque des revendications 1 à 3, caractérisé en ce que, après l'opération de transformation par chauffage, on met la matière obtenue en suspension dans un solvant hydrocarboné tel que du fuel, de l'alcool oxo, et on exécute un traitement d'hydrogénation par balayage d'hydrogène à une température de 250°C.

5. Matière ligneuse d'origine végétale, torréfiée, caractérisée en ce qu'elle présente les caractéristiques suivantes: elle a une teneur en carbone fixe comprise entre 35 et 40%, un pouvoir calorifique d'au moins 5000 kcal/kg (20 900 Kj/Kg), un pouvoir hygroscopique inférieur à 3%, elle n'est pas fermentescible et elle est solubilisable en totalité par hydrogénation à 250°C dans un solvant hydrocarboné du type fuel, alcool oxo.

## Patentansprüche

1. Verfahren zur Transformation von cellulosehaltigem Material in einen zerkleinerten Zustand durch 30minütige bis 5stündige Erwärmung, dadurch gekennzeichnet, daß man dieses Material in neutraler Atmosphäre bei einer Temperatur zwischen 200 und 280°C, vorzugsweise zwischen 230 und 260°C, erwärmt.

2. Verfahren nach Anspruch 1, dadurch gekennzeichnet, daß man das cellulosehaltige Material agglomeriert, bevor man es einer Behandlung durch Erwärmen unterzieht.

3. Verfahren nach Anspruch 1, dadurch gekennzeichnet, daß man das Material in einem flüssigen Bad erwärmt.

4. Verfahren nach einem oder mehreren der Ansprüche 1 bis 3, dadurch gekennzeichnet, daß man nach der Transformationsbehandlung durch Erwärmen das erhaltene Material in einem Kohlenwasserstofflösungsmittel, wie Heizöl, oxo-Alkohol, suspendiert und eine Hydrierungsbehandlung durch Spülen mit Wasserstoff bei einer Temperatur von 250°C ausführt.

5. Geröstetes cellulosehaltiges Material pflanzlichen Ursprungs, dadurch gekennzeichnet, daß es die folgenden Charakteristika aufweist: einen Gehalt an fixiertem Kohlenstoff zwischen 35 und 40%, einen Heizwert von mindestens 5000 kcal/kg (20 900 Kj/Kg), eine Saugfähigkeit von weniger als 3%; außerdem ist es nicht fermentierbar und es ist als Ganzes solubilisierbar durch Hydrierung bei 250°C in einem Kohlenwasserstofflösungsmittel vom Typ Heizöl, oxo-Alkohol.

## Claims

1. A method of transformation of woody matter in the fragmented state by heating for a period of from 30 minutes to 5 hours, characterized in that the said matter is heated in a neutral atmosphere at a temperature lying between 200 and 280°C, preferably between 230 and 260°C.

2. A method as in claim 1, characterized in that the woody matter is agglomerated before being subjected to the heating operation.

3. A method as in claim 1, characterized in that the matter is heated in a bath of liquid.

4. A method as in any one of the claims 1 to 3, characterized in that after the operation of transformation by heating, the product obtained is placed in suspension in a hydrocarbon solvent such as fuel-oil or oxo-process alcohol, and a hydrogenation treatment is carried out by passing hydrogen at a temperature of 250°C.

5. Roasted woody matter of vegetable origin, characterized in that it displays the following charac-

4

teristics: it has a content of fixed carbon lying between 35 and 40%, a calorific value of at least 5000 kcal/kg (20 900 Kj/Kg) and a hygroscopic value less than 3%, it is not fermentable and it is entirely soluble by hydrogenation at 250°C in a hydrocarbon solvent of the type of fuel-oil or of oxo-process alcohol.